# NEW EUROPEAN PATENT SPECIFICATION

(11) **EP 2 927 021 B2**
(45) Date of publication and mention of the opposition decision: **29.12.2021**
(45) Mention of the grant of the patent: 04.10.2017
(21) Application number: 15160961.7
(22) Date of filing: 26.03.2015
(51) Int. Cl.: B60B 27/00, F16D 65/12

(54) **WHEEL SUPPORT MECHANISM**
RADSTÜTZMECHANISMUS
MÉCANISME DE SUPPORT DE ROUE

(30) Priority: 31.03.2014 JP 2014073272
(43) Date of publication of application: 07.10.2015
(73) Proprietor: HONDA MOTOR CO., LTD., Tokyo, 107-8556 (JP)
(72) Inventor: Kuwano, Hideki, Saitama, 351-0193 (JP); Okaniwa, Takeshi, Saitama, 351-0193 (JP); Kuboyama, Hirotsugu, Saitama, 351-0193 (JP); Nagai, Ryuichi, Saitama, 351-0193 (JP); Ito, Shinji, Saitama, 351-0193 (JP); Ozeki, Shinichi, Saitama, 351-0193 (JP)
(74) Representative: Kiwit, Benedikt

(56) References cited:
- EP-A2- 1 422 133
- WO-A1-2011/070387
- DE-A1- 3 400 701
- DE-A1- 10 323 310
- DE-A1-102008 018 326
- US-A- 5 540 303
- US-A1- 2012 247 883

## Description

The present invention relates to an improvement of a wheel support mechanism which supports a wheel of a motor cycle.

With respect to a wheel support mechanism of a motor cycle, there has been known a technique where a hub and a wheel are provided as separate bodies from each other, the hub is supported on an axle, and the wheel is supported on the hub (for example, see Patent Literature 1 (Fig. 3) or also prior art document WO 2011 070 387). US 5,540,303 discloses a wheel hub and brake disc arrangement for heavy vehicles.

As shown in Fig. 3 of Patent Literature 1, in a wheel support mechanism, an inner wheel portion (2) is supported on an axle (108), and an outer wheel portion (3) which forms a separate body is supported on the inner wheel portion (2) (numeral with a parenthesis indicating symbol described in Patent Literature 1, the same definition being applicable hereinafter). A recessed portion is formed at the center of the outer wheel portion (3), the inner wheel portion (2) is fitted in the recessed portion, and a bolt (6) is inserted from an inner wheel portion (2) side thus fastening the inner wheel portion (2) to the outer wheel portion (3).

On the outer wheel portion (3), on a side opposite to a mounting position of the inner wheel portion (2), a mounting portion (11A) on which a disc plate (10) of a brake is mounted is provided. The disc plate (10) is arranged on the mounting portion (11A), and a bolt (14) is inserted from a disc plate (10) side thus fastening the disc plate (10) to the outer wheel portion (3).

The bolt (6) inserted from the inner wheel portion (2) side and the bolt (14) inserted from the disc plate (10) side are positioned on the same axis. However, since the bolt (6) and the bolt (14) are positioned on the same axis, a thickness of the outer wheel portion (3) is increased thus increasing a weight of the outer wheel portion (3). In view of the above, there has been a demand for a technique where an inner wheel portion (hereinafter referred to as a hub) and an outer wheel portion (hereinafter referred to as a wheel) are provided as separate bodies so that even when a brake disc is supported on a wheel, a thickness of the wheel is decreased thus realizing the reduction of weight of the wheel support mechanism.

Patent Literature 1: JP-A-2005-14846

It is an object of the invention to provide a wheel support mechanism which can realize the reduction of a weight of the wheel support mechanism by decreasing a thickness of a wheel even in a state where a hub and the wheel are provided as separate bodies and a brake disc is supported on the wheel.

The invention according to claim 1 is directed to a wheel support mechanism which includes: a hub supported on an axle; a wheel supported on the hub; and a brake disc supported on the wheel, wherein the wheel is fastened to the hub by a hub fastening member, and the brake disc is fastened to the wheel by a disc fastening member at a position outside the hub fastening member in a radial direction of the wheel.

The invention according to claim 2 is characterized in that a recessed portion in which the hub is accommodated is formed in the wheel, and a predetermined gap is formed between an inner peripheral surface of the recessed portion and an outer peripheral surface of the hub, and a positioning portion which decides a position of the wheel in a radial direction with respect to the hub is formed on a fastening portion between the hub and the wheel.

The invention according to claim 3 is characterized in that a disc support portion which supports the brake disc is formed on the wheel outside the recessed portion in a radial direction.

The invention according to claim 1 is characterized in that a pulser ring for detecting a wheel speed is mounted on the hub by a ring fastening member, and the ring fastening member is arranged inside the hub fastening member in a radial direction.

The invention according to claim 4 is characterized in that the wheel is positioned in the hub by the hub fastening member.

The invention according to claim 5 is characterized in that the wheel is formed by using an aluminum alloy, the hub is formed by using an iron-based material, a through hole through which the hub fastening member passes is formed in the wheel, and the hub fastening member is made to pass through the through hole from the hub, a nut is fastened to the hub fastening member thus supporting the wheel in a state where the wheel is sandwiched by the hub and the nut.

In the invention according to claim 1, the wheel support mechanism includes the hub supported on the axle, the wheel supported on the hub, and the brake disc supported on the wheel. The wheel is fastened to the hub by the hub fastening member, and the brake disc is fastened to the wheel by the disc fastening member at the position outside the hub fastening member in the radial direction of the wheel. The mounting portion of the hub fastening member and the mounting portion of the disc fastening member may be displaced from each other in the radial direction. Since the mounting portion of the hub fastening member and the mounting portion of the disc fastening member are displaced from each other in the radial direction, a thickness of the wheel in the vehicle width direction can be decreased. As a result, even when the hub and the wheel are provided as separate bodies and the brake disc is supported on the wheel, it is possible to reduce a weight of the wheel support mechanism by decreasing a thickness of the wheel.

In the invention according to claim 2, the recessed portion in which the hub is accommodated is formed in the wheel. Since the predetermined gap is formed between the recessed portion and the hub, the hub can be accommodated in the recessed portion even when size accuracy is not increased with respect to a diameter of the recessed portion and an outer diameter of the hub. As a result, it is unnecessary to ensure high working accuracy with respect to the diameter of the recessed portion formed in the wheel and the outer diameter of the hub thus reducing working man-hours. In addition to such advantages, the positioning portion which decides the position of the wheel in the radial direction with respect to the hub is formed in the fastening portion between the hub and the wheel and hence, it is unnecessary to perform positioning working separately whereby an amount of working can be decreased.

In the invention according to claim 3, the disc support portion which supports the brake disc is formed on the wheel outside the recessed portion in the radial direction and hence, a wall thickness of a portion of the wheel where the recessed portion is formed can be decreased thus realizing the reduction of weight of the whole wheel.

In the invention according to claim 1, the pulser ring for detecting a wheel speed is mounted on the hub by the ring fastening member. The hub is mounted on the axle, and the wheel is mounted on the hub. Assuming that the pulser ring is mounted on the wheel, an error between the axle and the hub and an error between the hub and the wheel are accumulated. In the invention, the pulser ring is mounted on the hub which becomes the center of rotation and hence, the cumulative size error can be decreased compared to the case where the pulser ring is mounted on the wheel.

In the invention according to claim 4, the wheel is positioned to the hub by the hub fastening member and hence, it is unnecessary to additionally provide the positioning portion on the hub and the wheel and hence, working man-hours of the hub and the wheel can be decreased.

In the invention according to claim 5, the wheel is formed using an aluminum alloy, the hub is formed using an iron-based material, the wheel has the through hole through which the hub fastening member passes, and the hub fastening member is made to pass through the through hole from the hub. The hub fastening member may have the structure where the hub fastening member is integrally mounted on the wheel and extends toward a hub side, and the structure where the hub fastening member is integrally mounted on the hub and extends toward the wheel side. The wheel is made of an aluminum alloy so that the wheel is relatively soft and hence, it is difficult to form the hub fastening member integrally with the wheel. In this respect, the hub is formed using an iron-based material so that the hub is relatively hard and hence, it is easy to form the hub fastening member integrally with the hub. That is, the wheel can be supported by the hub which is suitable for forming a portion to be supported.

Fig. 1 is a left side view of a motorcycle which adopts a wheel support mechanism of the invention.
Fig. 2 is a right side view of a rear portion of the motorcycle shown in Fig. 1.
Fig. 3 is a cross-sectional view taken along a line 3-3 in Fig. 2.
Fig. 4 is a right side view of the rear portion of the motorcycle shown in Fig. 2 in a state where a swing arm and a brake caliper are removed.
Fig. 5 is a right side view of the rear portion of the motorcycle shown in Fig. 4 in a state where a wheel is removed.
Fig. 6 is a left side view of a hub shown in Fig. 3.
Fig. 7 is a cross-sectional view taken along a line 7-7 in Fig. 6.
Fig. 8 is a plan view of a hub fastening member shown in Fig. 3.
Fig. 9 is an operational view of the wheel support mechanism shown in Fig. 3.

Hereinafter, an embodiment of the invention is explained in detail. Here, the directions of "frontward (Fr)", "rearward (Rr)", "leftward (L)", "rightward (R)", "upward (Up)", and "downward (Down)" are determined in accordance with directions as viewed from a rider.

The embodiment of the invention is explained by reference to drawings.

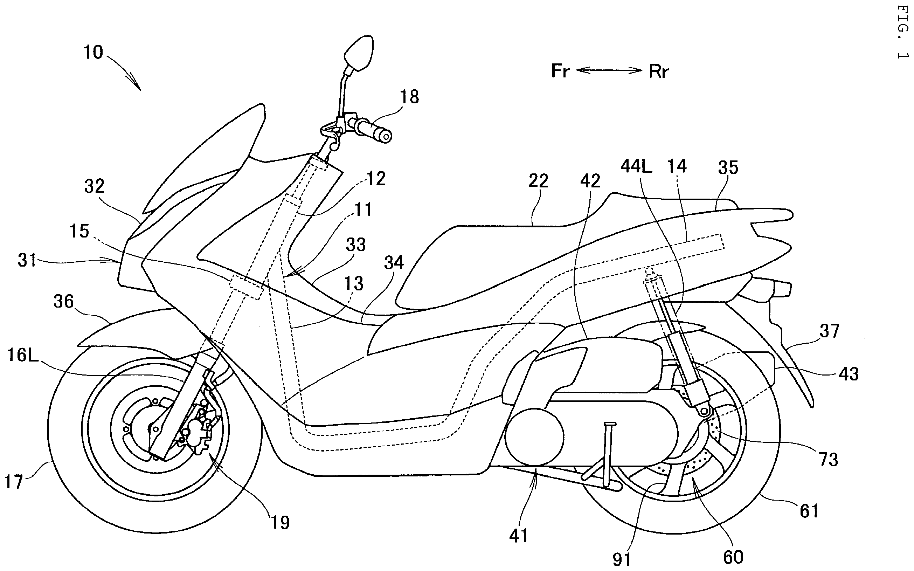

As shown in Fig. 1, a motorcycle 10 includes: a vehicle body frame 11; a vehicle body cover 31 which covers the vehicle body frame 11; and a power unit 41 which is swingably suspended from a rear portion of the vehicle body frame 11.

The vehicle body frame 11 is constituted of: a head pipe 12; a main frame 13 which extends rearwardly and downwardly from the head pipe 12; and a seat rail 14 which extends rearwardly and upwardly from a rear end of the main frame 13.

A front fork 16L (hereinafter, symbol L being a suffix indicating a left side, and symbol R being a suffix indicating a right side) is supported on a lower portion of the head pipe 12 by way of a bottom bridge 15, and a front wheel 17 (wheel 17) is rotatably supported on the front fork 16L. A handle bar 18 for steering the front wheel 17 is mounted on an upper portion of the head pipe 12, and a front brake unit 19 for applying braking to the front wheel 17 is mounted on the front fork 16L and the front wheel 17. Further, a seat 22 on which a rider is seated is mounted on an upper portion of the seat rail 14.

The vehicle body cover 31 is constituted of: a front cover 32 which covers a front side of the head pipe 12; a main frame cover 33 which covers an upper side of the main frame 13; a side cover 34 which covers sides of the main frame 13 in the vehicle width direction; and a rear cover 35 which covers the seat rail 14.

The power unit 41 includes: an air cleaner 42 which constitutes an intake system; a muffler 43 which constitutes an exhaust system; and a rear wheel 61 (wheel 61) which constitutes a drive wheel. A left rear cushion 44L is disposed between the power unit 41 and the seat rail 14, and a shock is absorbed by the left rear cushion 44L. The rear wheel 61 is supported on a wheel support mechanism 60 which is provided to the power unit 41. An upper side of the front wheel 17 is covered by a front fender 36, and an upper side of the rear wheel 61 is covered by a rear fender 37.

Next, a right side of a rear portion of the motorcycle of the invention is explained.

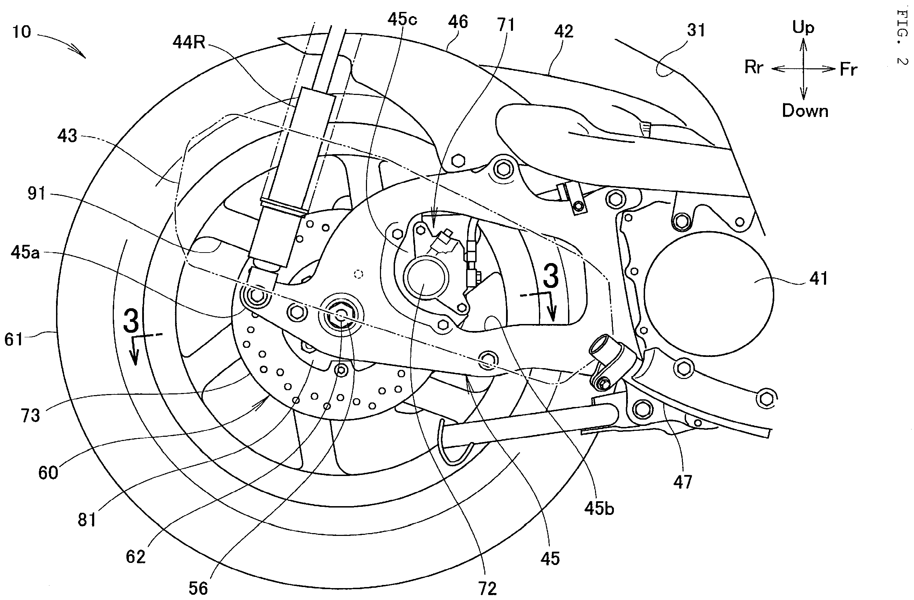

As shown in Fig. 2, a swing arm 45 on which an axle 62 is rotatably supported is integrally mounted on the power unit 41, and a right rear cushion 44R is disposed between a rear end portion 45a of the swing arm 45 and the seat rail 14. An inner fender 46 which extends along the rear wheel 61 and covers a front upper portion of the rear wheel 61 is mounted on a rear portion of the power unit 41.

Further, an opening portion 45b which opens sideward in the vehicle width direction is formed in the swing arm 45. A brake caliper 72 of a rear brake unit 71 is mounted in the opening portion 45b by way of a stay 45c. An exhaust pipe 47 extends from the power unit 41, the muffler 43 is connected to the exhaust pipe 47, and the muffler 43 is arranged on a side of the brake caliper 72 and a side of the swing arm 45 in the vehicle width direction.

Next, the wheel support mechanism is explained.

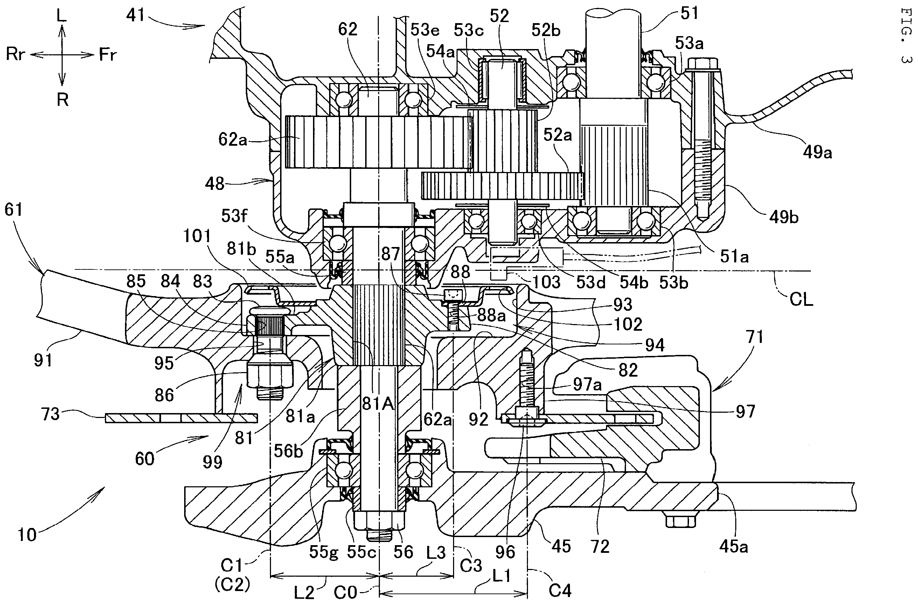

As shown in Fig. 2 and Fig. 3, the power unit 41 includes a final reduction mechanism 48. The final reduction mechanism 48 has: a first case 49a and a second case 49b which constitute a base portion; a first rotary shaft 51; a second rotary shaft 52; and the axle 62. A first gear 51a is integrally formed on the first rotary shaft 51. A second gear 52a which meshes with the first gear 51a and a third gear 52b which transmits a drive force to the axle 62 are integrally formed on the second rotary shaft 52. A fourth gear 62a which meshes with the third gear 52b is integrally mounted on the axle 62.

The first rotary shaft 51 is rotatably supported on a first bearing 53a which is mounted on the first case 49a and a second bearing 53b which is mounted on the second case 49b. The second rotary shaft 52 is rotatably supported on a third bearing 53c which is mounted on the first case 49a and a fourth bearing 53d which is mounted on the second case 49b. The axle 62 is rotatably supported on a fifth bearing 53e which is mounted on the first case 49a, a sixth bearing 53f which is mounted on the second case 49b, and a seventh bearing 53g which is mounted on the swing arm 45.

Washers 54a, 54b are mounted on the second rotary shaft 52 axially outside the second gear 52a and the third gear 52b respectively. The third bearing 53c is a needle bearing, and the first, second and fourth to seventh bearings 53a, 53b, 53d, 53e, 53f and 53g are ball bearings. The combination where the third bearing 53c is formed of a needle bearing and the fourth bearing 54d is formed of a ball bearing is used for supporting the second rotary shaft 52. Compared to the case where both bearings are respectively formed of a needle bearing, with the use of the ball bearing only on one side, it is possible to receive a thrust load applied in the axial direction.

A drive force of the engine is transmitted to the first rotary shaft 51 by way of a belt converter. A rotational force of the first rotary shaft 51 is transmitted to the second rotary shaft 52 by way of the first gear 51a and the second gear 52a. A rotational force of the second rotary shaft 52 is transmitted to the axle 62 by way of the third gear 52b and the fourth gear 62a.

A first collar 55a is fitted on the axle 62 adjacent to the sixth bearing 53f, a hub 81 is fitted on the axle 62 adjacent to the first collar 55a, and a stepped second collar 55b is fitted on the axle 62 adjacent to the hub 81. Further, the seventh bearing 53g is fitted on the axle 62 adjacent to the second collar 55b, a third collar 55c is fitted on the axle 62 adjacent to the seventh bearing 53g, and a nut 56 is fastened to a male threaded portion formed on an end portion of the axle 62.

The wheel support mechanism 60 includes: the hub 81 which joins a spline portion 81A formed on an inner periphery thereof to a spline portion 62a formed on an outer periphery of the axle 62 by spline fitting; and a wheel 91 which is supported by the hub 81. A brake disc 73 is supported by the wheel 91, and a pulser ring 101 is supported by the hub 81 on a side opposite to the wheel 91 in the vehicle width direction. The pulser ring 101 is a member for detecting a wheel speed.

A recessed portion 92 in which the hub 81 is accommodated is formed on the wheel 91. A gap 94 is formed between an inner peripheral surface 93 of the recessed portion 92 and an outer peripheral surface 82 of the hub 81. Due to the formation of the gap 94, the wheel 91 can be easily assembled to the hub 81.

The wheel 91 is fastened to the hub 81 by hub fastening members 83. Wheel mounting portions 84 for mounting the wheel 91 are formed on the hub 81. A serration portion 83b which is formed on a base portion of each hub fastening member 83 is press-fitted into a hole 85 formed in each wheel mounting portion 84. Through holes 95 through which the hub fastening members 83 pass are formed in the recessed portion 92 of the wheel 91. The hub fastening members 83 are respectively made to pass through the through holes 95 from a hub 81 side, and the nuts 86 are fastened to the hub fastening members 83 thus supporting the wheel 91 in a state where the wheel 91 is sandwiched by the hubs 81 and the nuts 86. In this manner, by supporting the wheel 91 in such a manner that the wheel 91 is sandwiched by the hub 81 and the nut 86, the number of openings to be formed in the wheel 91 by tapping can be decreased. Further, although it is necessary for the wheel 91 to ensure a certain thickness for forming holes in a wheel 91 side by tapping, a thickness of the wheel 91 can be made thin as described above.

The brake disc 73 is fastened to the wheel 91 by disc fastening members 96. That is, disc support portions 97 for mounting the brake disc 73 are formed on the wheel 91, the brake disc 73 is arranged on the disc support portions 97, and the disc fastening members 96 is fastened to female threaded portions 97a of the disc support portions 97 so that the brake disc 73 is supported on the wheel 91.

The pulser ring 101 is fastened to the hub 81 by ring fastening members 87. Ring mounting portions 88 for mounting the pulser ring 101 are formed on the hub 81. The pulser ring 101 is supported on the hub 81 by arranging the pulser ring 101 on the ring mounting portions 88, and by fastening the ring fastening members 87 to female threaded portions 88a of the ring mounting portions 88. Assuming the case where the pulser ring 101 is mounted on the wheel 91, an error generated between the axle 62 and the hub 81 and an error generated between the hub 81 and the wheel 91 are cumulated. To compare with such a case, in the invention, the pulser ring 101 is directly mounted on the hub 81 and hence, a cumulative size error can be made small.

The hub fastening members 83 and the ring fastening members 87 are inserted from a left side of the hub 81 in the vehicle width direction. The nuts 86 and the disc fastening members 96 are inserted from a right side of the wheel 91 in the vehicle width direction. In this manner, by distributing the hub fastening members 83, the ring fastening members 87, the nuts 86 and the disc fastening members 96 to left and right sides in the vehicle width direction, a small space in the vicinity of the axle 62 can be effectively used.

A wheel speed sensor 103 is mounted on the second case 49b at a position facing detection portions 102 formed in the pulser ring 101. A center line in the vehicle width direction is indicated by symbol CL.

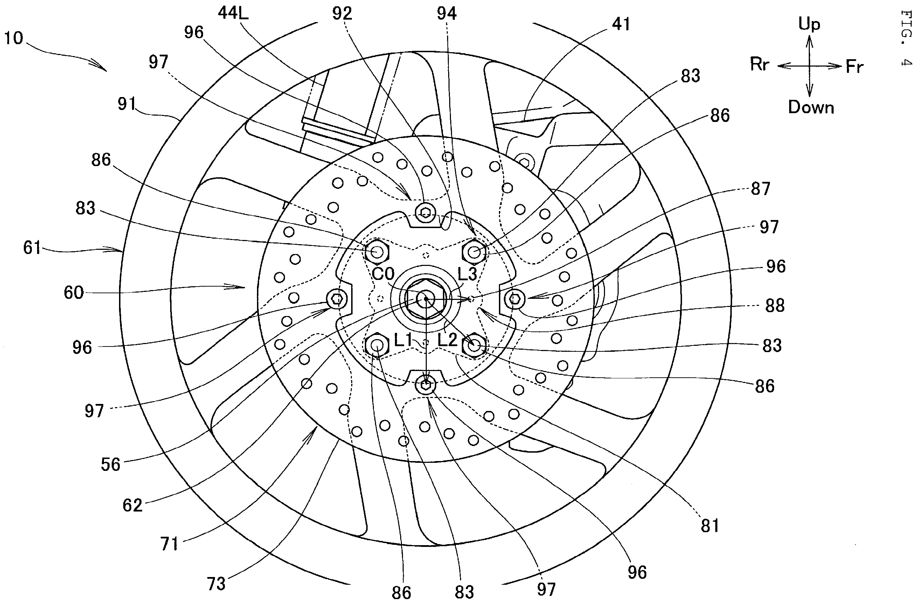

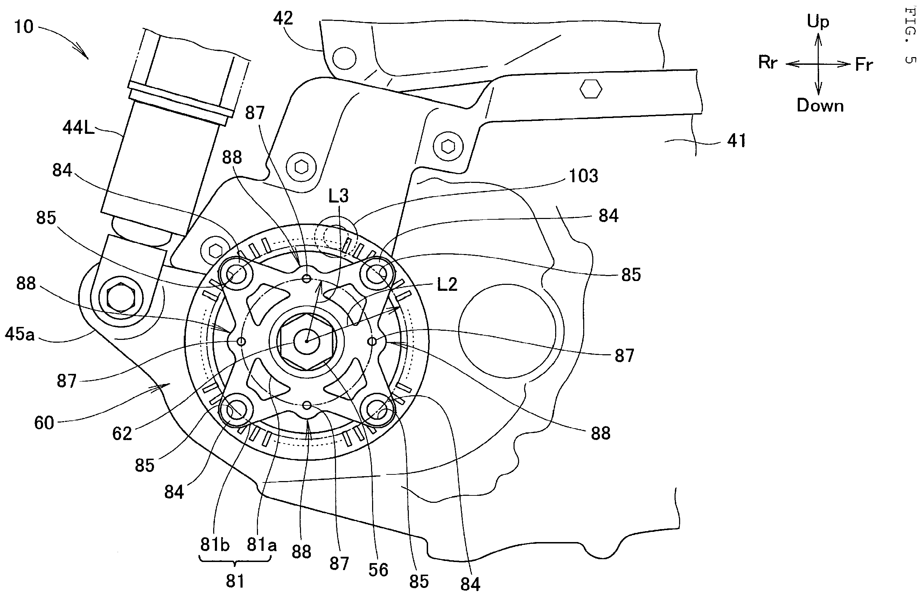

As shown in Fig. 3 to Fig. 5, the hub 81 is supported on the axle 62, the wheel 91 is supported on a right side of the hub 81 in the vehicle width direction, and the brake disc 73 is supported on a right side of the wheel 91 in the vehicle width direction. Further, the pulser ring 101 is supported on a left side of the hub 81 in the vehicle width direction, and the power unit 41 is arranged on a left side of the pulser ring 101 and the wheel 91 in the vehicle width direction.

The brake disc 73 is fastened to the wheel 91 by the disc fastening members 96 at positions outside the hub fastening member 83 in the radial direction of the wheel 91. The hub 81 has a so-called star shape. That is, the hub 81 has a cylindrical base portion 81a joined to the axle 62 and four projecting portions 81b which project in the radially outward direction from the base portion 81a, and the wheel mounting portion 84 is formed on distal end portions of four projecting portions 81b respectively.

Accordingly, the disc support portion 97 of the wheel 91 can be arranged in a space between the projecting portion 81b and the projecting portion 81b arranged adjacent to each other. The wheel mounting portion 84 of the hub fastening member 83 and the disc support portion 97 of the disc fastening member 96 can be displaced from each other in the radial direction. Accordingly, the female threaded portions 97a and the hub fastening members 83 overlap with each other in the vehicle width direction and hence, a thickness of the wheel 91 can be decreased.

To summarize the positional relationship described above, to express a distance from a center line C0 of the axle 62 to a center line C4 of the disc fastening member 96 as L1, a distance from the center line C0 of the axle 62 to a center line C1 of the hub fastening member 83 as L2, and a distance from the center line C0 of the axle 62 to a center line C3 of the ring fastening member 87 as symbol L3, the relationship of L3<L2<L1 is established.

As a result, even when the hub 81 and the wheel 91 are provided as separate bodies and the brake disc 73 is supported on the wheel 91, it is possible to reduce a weight of the wheel support mechanism by decreasing a thickness of the wheel 91. Additionally, by arranging the disc support portion 97 of the wheel 91 in the space between the projecting portion 81b of the hub 81 and the projecting portion 81b of the hub 81 which are arranged adjacent to each other, the disc support portion 97 having a large wall thickness compared to a spoke can be arranged close to the axle 62 thus reducing a weight of the wheel 91.

The disc support portions 97 are formed on the wheel 91 outside the recessed portion 92 in the radial direction and hence, a wall thickness of a portion of the wheel 91 where the recessed portion 92 is formed can be decreased thus realizing the reduction of weight of the wheel 91 as a whole.

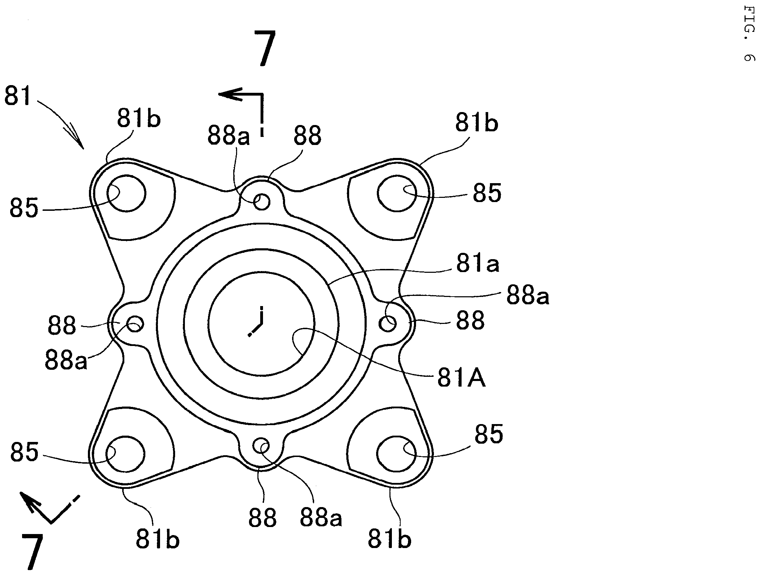

As shown in Fig. 3 and Fig. 6, in the hub 81, the ring mounting portions 88 to which the ring fastening members 87 are fastened are arranged inside the wheel mounting portions 84 to which the hub fastening members 83 are fastened in the radial direction. The pulser ring 101 for detecting a wheel speed is mounted on the ring mounting portions 88 by the ring fastening members 87. The hub 81 is mounted on the axle 62, and the wheel 91 is mounted on the hub 81. The pulser ring 101 is mounted on the hub 81 which becomes the center of rotation and hence, the cumulative size error can be decreased compared to the case where the pulser ring 101 is mounted on the wheel 91.

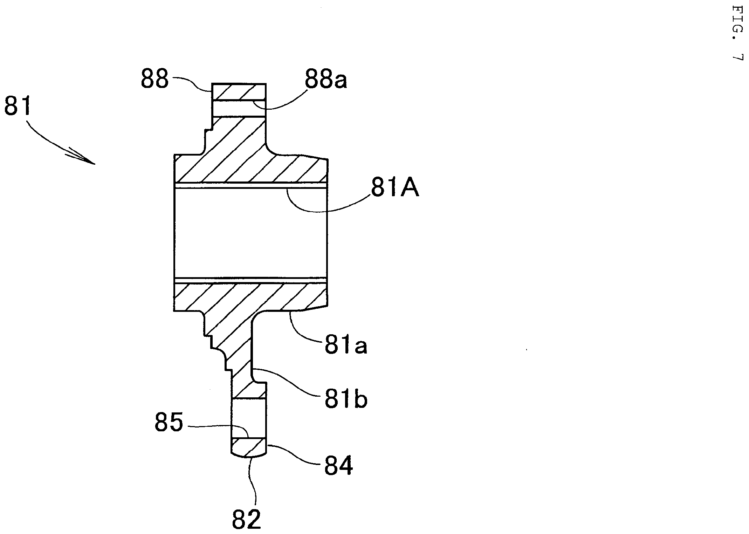

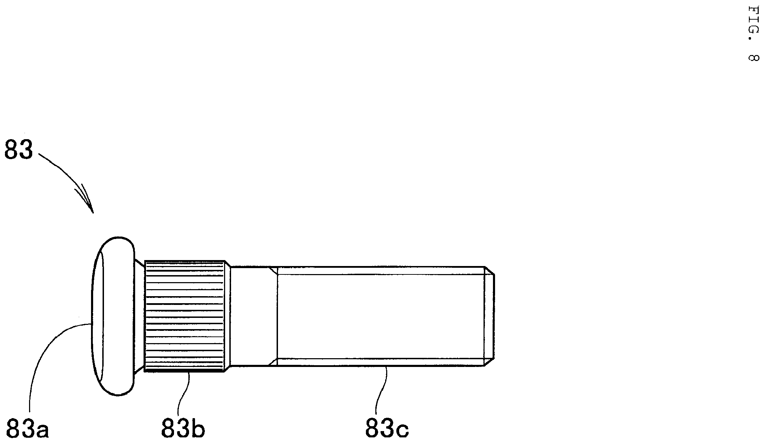

As shown in Fig. 7 and Fig. 8, the hole 85 formed in the wheel mounting portion 84 is formed by a reamer. The hub fastening member 83 for mounting the wheel 91 which also functions as a member for positioning the wheel 91 is press-fitted into the hole 85. The hub fastening member 83 includes: a head portion 83a; a serration portion 83b which extends from the head portion 83a; and a threaded portion 83c which extends from the serration portion 83b. By press-fitting the hub fastening member 83, the serration portion 83b is positioned in the hole 85 of the wheel mounting portion 84.

The manner of operation and advantageous effects of the wheel support mechanism described above are described hereinafter.

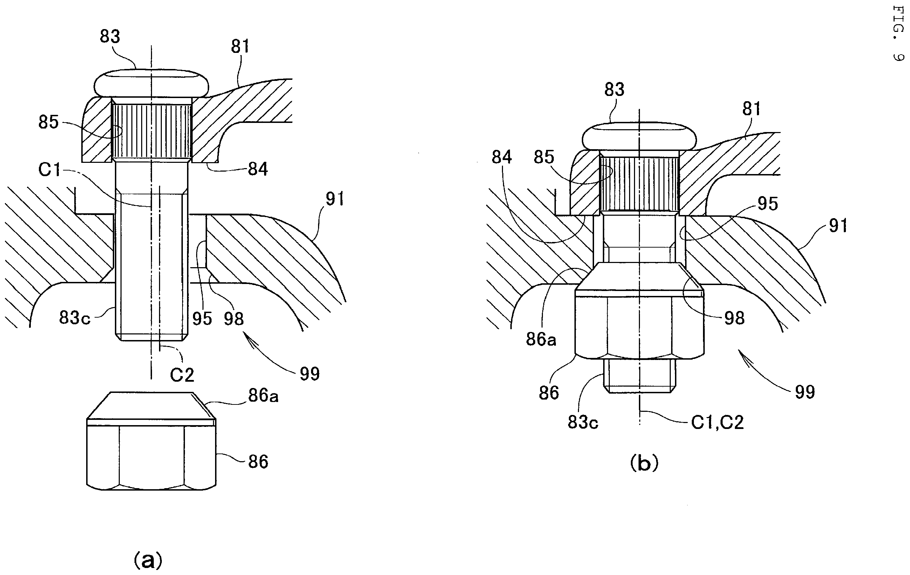

As shown in Fig. 9(a), the wheel 91 is formed using an aluminum alloy, and the hub 81 is formed using an iron-based material (chromium molybdenum steel, carbon steel, stainless steel or the like). The hub 81 is formed using an iron-based material so that the hub 81 is relatively hard and hence, it is easy to form the hub fastening members 83 integrally with the hub 81. That is, the hub fastening members 83 are press-fitted into the holes 85 of the hub 81 which are suitable for forming a portion to be supported.

The wheel 91 is moved, and the threaded portions 83c of the hub fastening members 83 are made to pass through the through holes 95 formed in the wheel 91. A diameter of the through hole 95 is set larger than a diameter of the threaded portion 83c and hence, the threaded portions 83c can be easily made to pass through the through holes 95.

There is no problem even when the center line C1 of the hub fastening member 83 and the center line C2 of the through hole 95 are displaced from each other. Further, a portion of the through hole 95 on a side where the nut 86 is seated is chamfered, and the chamfered portion forms a positioning portion 98 which decides the position of the wheel 91 with respect to the hub 81. The positioning portion 98 is formed on a fastening portion 99 between the hub 81 and the wheel 91.

As shown in Fig. 9(b), a positioning taper 86a is formed on the nut 86 on a side where the nut 86 is seated on the through hole 95. When the nut 86 is threadedly engaged with the threaded portion 83c of the hub fastening member 83, the taper 86a of the nut 86 is brought into contact with the positioning portion 98. When the nut 86 is further threadedly engaged with the threaded portion 83c of the hub fastening member 83, the positioning portion 98 is guided by the taper 86a, and the center line C1 of the hub fastening member 83 agrees with the center line C2 of the through hole 95. As a result, the position of the wheel 91 with respect to the hub 81 is decided and, at the same time, the wheel 91 is mounted on the hub 81.

By merely chamfering the portion where the through hole 95 is formed and by merely using the nut 86 having the taper 86a, it is possible to reduce a cost of parts and a working cost. In this manner, by positioning the wheel 91 with respect to the hub 81 by the hub fastening members 83, it is unnecessary to provide additional positioning portions to the hub 81 and the wheel 91 and hence, working man-hours of the hub 81 and the wheel 91 can be decreased.

According to the invention, in this embodiment, the wheel support mechanism 60 is mounted on the rear wheel 61. However, the invention is not limited to such an embodiment. Provided that the hub 81 and the wheel 91 are formed as separate bodies, and the brake disc 73 is fastened to the wheel 91 by the disc fastening member 96 at a position outside the hub fastening member 83 in the radial direction of the wheel 91, the wheel support mechanism 60 may be mounted on the front wheel 17 without any problem. Further, the wheel support mechanism 60 of the invention is applied to the scooter-type vehicle in the above-mentioned embodiment. However, the invention is not limited to the scooter-type vehicle, and the wheel support mechanism 60 of the invention may be also applied to a saddle-ride-type vehicle without any problem.

The invention is preferably applicable to a motorcycle which includes: a hub supported on an axle; a wheel supported on the hub; and a brake disc supported on the wheel.

### Description of Reference Numerals and Signs:

10: motorcycle
60: wheel support mechanism
61: rear wheel (wheel)
62: axle
73: brake disc
81: hub
83: hub fastening member
86: nut
87: ring fastening member
91: wheel
92: recessed portion
93: inner peripheral surface
94: gap
95: through hole
96: disc fastening member
97: disc support portion
98: positioning portion
99: fastening portion
101: pulser ring

## Claims

1. A wheel support mechanism (60) comprising: a hub (81) supported on an axle (62); a wheel (91) supported on the hub (81); and a brake disc (73) supported on the wheel (91), wherein
the wheel (91) is fastened to the hub (81) by a hub fastening member (83),
the brake disc (73) is fastened to the wheel (91) by a disc fastening member (96), and
the disc fastening member (96) is fastened to the wheel (91) at a position outside the hub fastening member (83) in a radial direction of the wheel (91),
**characterised in that** a pulser ring (101) for detecting a wheel speed is mounted on the hub (81) by a ring fastening member (87), and the ring fastening member (87) is arranged inside the hub fastening member (83) in a radial direction.

2. The wheel support mechanism according to claim 1, wherein a recessed portion (92) in which the hub (81) is accommodated is formed in the wheel (91), and a predetermined gap (94) is formed between an inner peripheral surface (93) of the recessed portion (92) and an outer peripheral surface (82) of the hub (81), and
a positioning portion (98) which decides a position of the wheel (91) in a radial direction with respect to the hub (81) is formed on a fastening portion (99) between the hub (81) and the wheel (91).

3. The wheel support mechanism according to claim 2, wherein a disc support portion (97) which supports the brake disc (73) is formed on the wheel (91) outside the recessed portion (92) in a radial direction.

4. The wheel support mechanism according to any one of the preceding claims, wherein the wheel (91) is positioned in the hub (81) by the hub fastening member (83).

5. The wheel support mechanism according to any one of the preceding claims, wherein the wheel (91) is formed by using an aluminum alloy, the hub (81) is formed by using an iron-based material,
a through hole (95) through which the hub fastening member (83) passes is formed in the wheel (91), and
the hub fastening member (83) is made to pass through the through hole (95) from the hub (81), a nut (86) is fastened to the hub fastening member (83) thus supporting the wheel (91) in a state where the wheel (91) is sandwiched by the hub (81) and the nut (86).

## Patentansprüche

1. Radhalterungsmechanismus (60), der aufweist: eine Nabe (81), die an einer Achse (62) gehalten wird; ein Rad (91), das an der Nabe (81) gehalten wird; und eine Bremsscheibe (73, die an dem Rad (91) gehalten wird, wobei
das Rad (91) an der Nabe (81) durch ein Nabenbefestigungselement (83) befestigt ist,
die Bremsscheibe (73) an dem Rad (91) durch ein Bremsscheibenbefestigungselement (96) befestigt ist, und
das Bremsscheibenbefestigungselement (96) an dem Rad (91) an einer Position außerhalb des Nabenbefestigungselements (83) in einer radialen Richtung des Rades (91) befestigt ist,
**dadurch gekennzeichnet, dass**
ein Impulsgeberring (101) zum Erfassen einer Radgeschwindigkeit an der Nabe (81) durch ein Ringbefestigungselement (87) befestigt ist, und das Ringbefestigungselement (87) innerhalb des Nabenbefestigungselements (83) in einer radialen Richtung angeordnet ist.

2. Radhalterungsmechanismus nach Anspruch 1,
wobei ein ausgesparter Bereich (92), in dem die Nabe (81) aufgenommen ist, im Rad (91) ausgebildet ist, und ein bestimmter Abstand (94) zwischen einer inneren Umfangsfläche (93) des ausgesparten Bereichs (92) und einer äußeren Umfangsfläche (82) der Nabe (81) ausgebildet ist, und
ein Positionierungsbereich (98), der eine Position des Rades (91) in einer radialen Richtung bezüglich der Nabe (81) bestimmt, an einem Befestigungsbereich (99) zwischen der Nabe (81) und dem Rad (91) ausgebildet ist.

3. Radhalterungsmechanismus nach Anspruch 2, wobei ein Bremsscheibenhalterungsbereich (97), der die Bremsscheibe (73) hält, an dem Rad (91) außerhalb des ausgesparten Bereichs (92) in einer radialen Richtung ausgebildet ist.

4. Radhalterungsmechanismus nach einem der vorhergehenden Ansprüche, wobei das Rad (91) in der Nabe (81) durch das Nabenbefestigungselement (83) angeordnet ist.

5. Radhalterungsmechanismus nach einem der vorhergehenden Ansprüche, wobei
das Rad (91) durch eine Aluminiumlegierung ausgebildet ist,
die Nabe (81) durch ein eisenbasiertes Material ausgebildet ist,
eine Durchgangsöffnung (95), durch die das Nabenbefestigungselement (83) durchgeht, im Rad (91) ausgebildet ist, und
das Nabenbefestigungselement (83) so geformt ist, dass es durch die Durchgangsöffnung (95) der Nabe (81) durchgeht, eine Mutter (86) an dem Nabenbefestigungselement (83) befestigt ist, wodurch das Rad (91) in einem Zustand gehalten wird, in dem das Rad (91) zwischen der Nabe (81) und der Mutter (86) angeordnet ist.

## Revendications

1. Mécanisme de support de roue (60) comprenant un moyeu (81) supporté sur un essieu (62) ; une roue (91) supportée sur le moyeu (81) ; et un disque de frein (73) supporté sur la roue (91), dans lequel
la roue (91) est fixée au moyeu (81) par un élément de fixation de moyeu (83),
le disque de frein (73) est fixé à la roue (91) par un élément de fixation de disque (96), et
l'élément de fixation de disque (96) est fixé à la roue (91) à une position en dehors de l'élément de fixation de moyeu (83) suivant une direction radiale de la roue (91)
**caractérisé en ce que**
un anneau-pulseur (101) destiné à détecter une vitesse de roue est monté sur le moyeu (81) par un élément de fixation d'anneau (87) et l'élément de fixation d'anneau (87) est agencé à l'intérieur de l'élément de fixation de moyeu (83) suivant une direction radiale.

2. Mécanisme de support de roue selon la revendication 1, dans lequel une partie en renfoncement (92), dans laquelle est logé le moyeu (81), est formée dans la roue (91) et un jeu prédéterminé (94) est formé entre une surface de périphérie interne (93) de la partie en renfoncement (92) et une surface de périphérie externe (82) du moyeu (81), et
une partie de positionnement (98) qui décide d'une position de la roue (91) suivant une direction radiale par rapport au moyeu (81) est formée sur une partie de fixation (99) entre le moyeu (81) et la roue (91).

3. Mécanisme de support de roue selon la revendication 2, dans lequel une partie de support de disque (97) qui supporte le disque de frein (73) est formée sur la roue (91) en dehors de la partie en renfoncement (92) suivant une direction radiale.

4. Mécanisme de support de roue selon l'une quelconque des revendications précédentes, dans lequel la roue (91) est positionnée dans le moyeu (81) par l'élément de fixation de moyeu (83).

5. Mécanisme de support de roue selon l'une quelconque des revendications précédentes, dans lequel
la roue (91) est formée en utilisant un alliage d'aluminium,
le moyeu (81) est formé en utilisant un matériau à base de fer,
un trou traversant (95) à travers lequel passe l'élément de fixation de moyeu (83) est formé dans la roue (91), et
l'élément de fixation de moyeu (83) est réalisé de façon à passer à travers le trou traversant (95) à partir du moyeu (81), un écrou (86) est fixé à l'élément de fixation de moyeu (83), supportant de ce fait la roue (91) dans un état où la roue (91) est intercalée entre le moyeu (81) et l'écrou (86).
